# EUROPÄISCHE PATENTSCHRIFT

(11) **EP 4 527 568 B1**
(45) Veröffentlichungstag und Bekanntmachung des Hinweises auf die Patenterteilung: **04.11.2026**
(21) Anmeldenummer: 24198796.5
(22) Anmeldetag: 06.09.2024
(51) Int. Cl.: B25J 15/02, B25J 15/00

(54) **GREIFER ZUR DEMONTAGE EINES BATTERIEMODULS EINER BATTERIEEINHEIT**
GRIPPER FOR DISASSEMBLING A BATTERY MODULE OF A BATTERY UNIT
PINCE POUR DÉMONTER UN MODULE DE BATTERIE D'UNITÉ DE BATTERIE

(30) Priorität: 19.09.2023 DE 102023125259
(43) Veröffentlichungstag der Anmeldung: 26.03.2025
(73) Patentinhaber: Liebherr-Verzahntechnik GmbH, 87437 Kempten (DE)
(72) Erfinder: Pollmann, Jan, 87439 Kempten (DE); Hößle, Florian, 87527 Sonthofen (DE); Hiemer, Lukas, 87452 Altusried (DE)
(74) Vertreter: Lorenz Seidler Gossel Part. mbB

(56) Entgegenhaltungen:
- DE-A1- 102018 121 089
- DE-A1- 102019 132 588
- DE-B3- 102021 204 894
- JP-A- 2011 245 595

## Beschreibung

Die Erfindung betrifft einen Greifer zur Demontage eines Batteriemoduls aus einer Batterieeinheit. Insbesondere kann der Greifer zur automatisierten Demontage von Batteriemodulen aus Batterieeinheiten, wie sie beispielsweise für E-Antriebs-Baukästen genutzt werden, eingesetzt werden.

Die Demontage von hochintegrierten Komponenten im Bereich der E-Mobilität im Sinne eines Recyclingvorgangs erfolgt bisher noch in manueller Arbeit. Diese manuelle Vorgehensweise ist auch bei der Demontage von Batteriemodulen aus E-Antriebs-Baukästen nachteilig, da die Gewichte der Batteriemodule sehr hoch sind und weiterhin die Gefahr von Arbeitsunfällen besteht. Ferner ist eine stetig steigende Anzahl an Demontagevorgängen zu bewältigen, sodass es erforderlich ist, den Prozess zu beschleunigen.

Die DE 10 2021 204 894 B3 beschreibt eine Hubvorrichtung mit einem Aushebel-Greifer, welche über eine gerichtete Hebelbewegung des Aushebel-Greifers ein Batteriemodul aus einem Batterietrog löst und hebt. Das Greiferwerkzeug ist hierbei an einem Kettenzug aufgehangen. Der Aushebel-Greifer umfasst eine Greifkontur und eine auf einer der Greifkontur gegenüberliegenden Seite angeordnete Abstützfläche zum Abstützen an einem Gegenelement. Durch Verschwenken des Aushebel-Greifers wird durch das Abstützen der Abstützfläche auf dem Gegenelement eine Abdrückkraft auf die Greifkontur ausgeübt, um das Batteriemodul einseitig anzuheben.

Zum Ablösen der Batteriemodule aus dem Batterietrog beschreibt DE 10 2019 126 552 A1 eine alternative Möglichkeit zum Einsatz von Hebelkräften, welche auf einem Dichtungselement basiert, auf dem die Batterie aufsitzt und das durch Befestigungsmittel in Position gehalten wird. Nach dem Lösen der Befestigungsmittel dehnt sich das Dichtungselement aus und führt damit das Ablösen des Batteriemoduls herbei.

Druckschrift DE 102019132588 A1 zeigt eine Hand zum Abheben eines Werkstücks von einem Stapel von Werkstücken. Die Hand umfasst mehrere erste Greifelemente, die sich relativ bewegen; eine erste Antriebseinheit, die die mehreren ersten Greifelemente in einer ersten Öffnungs/Schließrichtung, in der sie sich aneinander annähern oder voneinander entfernen, bewegt; mehrere zweite Greifelemente, die sich von den mehreren ersten Greifelementen unabhängig relativ bewegen; eine zweite Antriebseinheit, die die mehreren zweiten Greifelemente in einer zweiten Öffnungs/Schließrichtung, in der sie sich aneinander annähern oder voneinander entfernen, bewegt; und eine dritte Antriebseinheit, die die mehreren ersten Greifelemente in Bezug auf die mehreren zweiten Greifelemente in einer die erste Öffnungs/Schließrichtung und die zweite Öffnungs/Schließrichtung kreuzenden dritten Richtung bewegt.

Weitere Greifer sind aus DE 10 2018 121089 A1 und JP 2011245595 A bekannt.

Aufgabe der vorliegenden Erfindung ist es, einen verbesserten Greifer zur automatisierten Demontage eines Batteriemoduls einer Batterieeinheit zur Verfügung zu stellen.

Diese Aufgabe wird durch die Greifer gemäß Anspruch 1 und 2 gelöst. Bevorzugte Weiterbildungen der Erfindung sind in den Unteransprüchen offenbart.

Gemäß einem ersten Aspekt umfasst die vorliegende Erfindung einen Greifer zur automatisierten Demontage eines Batteriemoduls einer Batterieeinheit, welcher eine Schnittstelle zur Montage des Greifers an einer Handlingeinheit, eine Konsole und eine Abdrückeinheit, mit welcher das Batteriemodul aus einem Gehäuse der Batterieeinheit herauslösbar ist, umfasst. Der Greifer weist ein an der Konsole beweglich angeordnetes Greifelement auf, welches durch einen ersten Aktor unter eine Kontur des Batteriemoduls fahrbar ist und somit das Modul sicher greift. Erfindungsgemäß umfasst der Greifer gemäß dem ersten Aspekt weiterhin ein Abdrückelement mit einer Abstützfläche zum Abstützen an einem Gegenelement, wobei das Abdrückelement beweglich an der Konsole angeordnet ist und mittels eines zweiten Aktors bewegbar ist, um eine Abdrückkraft auf die Konsole auszuüben, durch welche das Modul mittels des an der Konsole angeordneten Greifelements angehoben wird. Hierbei sind das Abdrückelement und das Greifelement so ausgestaltet, dass das Batteriemodul durch einseitiges Anheben aus dem Gehäuse der Batterieeinheit herauslösbar ist.

Anders als gemäß dem Stand der Technik DE 10 2021 204 894 B3 sind die Funktion des Greifens und die Funktion des Erzeugens einer Abdrückkraft daher nicht mehr in einem Bauteil vereint, sondern werden auf zwei getrennte Bauteile verteilt. Hierdurch ergibt sich eine höhere Prozesssicherheit. Insbesondere wird sichergestellt, dass der Prozess des Greifens sicher abgeschlossen ist, bevor der Prozess des Herauslösens aus der Klebeverbindung erfolgt, und sicher vermieden, dass sich der Griff durch das Greifelement löst, während die Abdrückkraft auf das Greifelement ausgeübt wird. Insbesondere kann gemäß der vorliegenden Erfindung hierfür das Greifelement so an der Konsole angeordnet sein, dass es bei einer Bewegung des Abdrückelements über den zweiten Aktor nicht gegenüber der Konsole bewegt wird.

Gemäß einem zweiten, unabhängigen Aspekt umfasst die vorliegende Erfindung einen Greifer zur automatisierten Demontage eines Batteriemoduls einer Batterieeinheit, welcher eine Schnittstelle zur Montage des Greifers an einer Handlingeinheit, eine Tragkonsole und eine Abdrückeinheit, mit welcher das Batteriemodul durch einseitiges Anheben aus einem Gehäuse der Batterieeinheit herauslösbar ist, umfasst. Gemäß dem zweiten Aspekt ist die Abdrückeinheit an einer Schwenkkonsole angeordnet, welche schwenkbar an der Tragkonsole angelenkt ist und bei der Betätigung der Abdrückeinheit mit dem gegriffenen Batteriemodul mitverschwenkt. Hierdurch wird vermieden, dass die Kräfte, welche beim einseitigen Anheben entstehen, auf die Tragkonsole und damit auf die Handlingeinheit übertragen werden. Insbesondere ist die Schnittstelle hierbei an der Tragkonsole vorgesehen, so dass die Schenkkonsole gegenüber der Schnittstelle verschwenkbar angeordnet ist.

Gemäß einer möglichen Ausgestaltung der vorliegenden Erfindung ist vorgesehen, dass der Greifer mit einer Abdrückeinheit versehen ist, welche auf einer der Schwenkachse gegenüberliegenden Seite der Schwenkkonsole angeordnet ist.

Gemäß einer möglichen Ausgestaltung der vorliegenden Erfindung ist vorgesehen, dass der Greifer mit einer Abdrückeinheit versehen ist, welche eine Abdrückbewegung erzeugt, welche in einer Ebene senkrecht zur Schwenkachse verläuft.

Gemäß dem zweiten Aspekt der vorliegenden Erfindung ist vorgesehen, dass an der Schwenkkonsole des Greifers mindestens ein Greifelement angeordnet ist.

Gemäß einer möglichen Ausgestaltung der vorliegenden Erfindung ist vorgesehen, dass das Greifelement mittels eines Aktors unter eine Kontur des Batteriemoduls fahrbar ist.

Gemäß einer möglichen Ausgestaltung der vorliegenden Erfindung ist vorgesehen, dass das Greifelement auf einer der Schwenkachse gegenüberliegenden Seite der Schwenkkonsole angeordnet ist.

Gemäß einer möglichen Ausgestaltung der vorliegenden Erfindung ist vorgesehen, dass an der Schwenkkonsole ein Abdrückelement mit einem Abstützelement zum Abstützen an einem Gegenelement angeordnet ist, wobei das Abdrückelement mittels eines Aktors bewegbar ist, um eine Abdrückbewegung durchzuführen, wobei bevorzugt durch die Abdrückbewegung des Abdrückelements das Modul mittels des Greifelements einseitig angehoben und aus der Verbindung zum Boden der Batterie gelöst wird.

Der erste und der zweite Aspekt gemäß der vorliegenden Erfindung sind zunächst unabhängig voneinander Gegenstand der vorliegenden Anmeldung. Bevorzugt werden die beiden Aspekte jedoch miteinander kombiniert.

Bevorzugte Ausgestaltungen, welche sich sowohl auf einen Greifer gemäß dem ersten Aspekt, als auch auf einen Greifer gemäß dem zweiten Aspekt beziehen, werden im folgenden näher beschrieben.

Gemäß einer möglichen Ausgestaltung der vorliegenden Erfindung handelt es sich bei der Handlingeinheit um einen Roboter. Insbesondere kann der Greifer hierbei über die Schnittstelle an einem Roboterarm des Roboters angeordnet und über diesen bewegt werden. Bei dem Roboter kann es sich um einen Roboter mit einer Mehrzahl von Schwenkachsen handeln, beispielsweise ein Industrieroboter mit mindestens vier Schwenkachsen. Als Handlingeinheit kann alternativ auch Linear- oder Flächenportal eingesetzt werden.

Gemäß einer möglichen Ausführungsform der Erfindung ist das mindestens ein Greifelement des Greifers um eine Drehachse drehbar oder linear verfahrbar, um unter die Kontur des Batteriemoduls zu greifen, wobei die Drehachse bevorzugt horizontal ausgerichtet ist.

Bevorzugt ist das Greifelement über zwei koaxiale Lagerstellen schwenkbar an der Konsole gelagert, wobei eine Greifkontur des Greifelementes in einem Bereich zwischen den beiden Lagerstellen und/oder im Bereich der Schwenkachse des Greifelementes angeordnet ist. Hierdurch kann die Greifkontur auch bei sehr beengten Platzverhältnissen unter die Kontur des Batteriemoduls geschwenkt werden.

Eine vorteilhafte Ausbildung der Erfindung sieht vor, dass für den Greifer mindestens zwei Greifelemente vorgesehen sind, welche auf gegenüberliegenden Seiten unter eine Kontur des Batteriemoduls fahrbar sind, wobei bevorzugt die beiden Greifelemente beweglich an dem Greifer, insbesondere der Konsole bzw. Schwenkkonsole, angeordnet sind und durch mindestens einen Aktor bewegbar sind.

Gemäß einer möglichen Ausgestaltung der vorliegenden Erfindung ist vorgesehen, dass ein Abdrückelement der Abdrückeinheit schwenkbar an dem Greifer angelenkt ist und zur Erzeugung der Abdrückbewegung über einen Aktor verschwenkbar ist. Insbesondere wird das Abdrückelement hierbei durch eine Hebelbewegung bewegt.

Gemäß einer alternativen Ausgestaltung der vorliegenden Erfindung ist das Abdrückelement linear verfahrbar an dem Greifer angeordnet und/oder zur Erzeugung der Abdrückbewegung über einen Aktor linear verfahren wird. Insbesondere kann das Abdrückelement hierbei unmittelbar an dem als Linearaktor ausgeführten Aktor angeordnet sein, insbesondere am Ende des Kolbens einer Kolben-Zylinder-Einheit.

Gemäß einer möglichen Ausgestaltung weist das Abdrückelement ein Abstützelement zum Abstützen auf einem Gegenelement auf, wobei es sich bevorzugt um eine Rolle handelt.

Gemäß einer möglichen Ausgestaltung weist die Abdrückeinheit als Aktor einen Hydraulik-, Elektrik- oder Pneumatikzylinder auf.

Gemäß einer möglichen Ausgestaltung der vorliegenden Erfindung ist vorgesehen, dass die Abdrückbewegung auf eine Konsole des Greifers und ein an dieser Konsole zur Ausführung der Greifbewegung beweglich angeordnetes Greifelement des Greifers übertragen wird.

Beispielsweise erfolgt die Kraftübertragung über eine Schwenkachse, an welcher das Abdrückelement schwenkbar am Greifer angelenkt ist.

Alternativ oder zusätzlich erfolgt die Kraftübertragung über den Aktor, insbesondere dann, wenn das Abdrückelement unmittelbar am Aktor angeordnet ist.

Gemäß einer möglichen Ausgestaltung der vorliegenden Erfindung ist vorgesehen, dass es sich bei der Konsole bevorzugt um eine Schwenkkonsole handelt, welche über eine Schwenkachse an der Tragkonsole angeordnet ist.

Ist das Abdrückelement verschwenbar angeordnet, ist bevorzugt vorgesehen, dass die Schwenkachsen von Abdrückelement und Schwenkkonsole parallel verlaufen und/oder auf gegenüberliegenden Seiten an der Schwenkkonsole angeordnet sind.

Wird das Abdrückelement linear verfahren, ist bevorzugt vorgesehen, dass die Verfahrbewegung des Abdrückelements in Ebene erfolgt, welche senkrecht auf der Schwenkachse der Schwenkkonsole steht, wobei die Verfahrbewegung bevorzugt im wesentlichen tangential zu der Schwenkachse der Schwenkkonsole erfolgt, und/oder wobei die Schwenkachse der Schwenkkonsole und der Aktor auf gegenüberliegenden Seiten an der Schwenkkonsole angeordnet sind.

Die vorliegende Erfindung umfasst weiterhin ein System, welches die automatisierte Demontage eines Batteriemoduls einer Batterieeinheit ermöglicht, wobei es aus einem Greifer wie oben beschrieben, eine Handlingeinheit und eine Steuerung umfasst. Die Steuerung steuert hierbei die Handlingeinheit und den Greifer an. Insbesondere steuert die Steuerung die Handlingeinheit und den Greifer so an, dass die Demontage des Deckels automatisiert und ohne händischen Eingriff erfolgt.

Gemäß einer möglichen Ausgestaltung der vorliegenden Erfindung ist vorgesehen, dass die Steuerung des Systems so ausgestaltet ist, dass in einem ersten Schritt eine Verbindung, insbesondere eine formschlüssige Verbindung mindestens eines Greifelementes des Greifers mit dem Batteriemodul hergestellt wird und in einem zweiten Schritt das Batteriemodul durch Betätigen der Abdrückeinheit einseitig angehoben wird, um die Verbindung zum Boden des Batteriesystems zu lösen.

Gemäß einer möglichen Ausgestaltung der vorliegenden Erfindung ist vorgesehen, dass das System so ausgestaltet ist, dass der erste und der zweite Schritt durch unterschiedliche Aktoren durchgeführt werden.

Gemäß einer möglichen Ausgestaltung der vorliegenden Erfindung ist vorgesehen, dass das System so ausgestaltet ist, dass das Greifelement während des zweiten Schrittes nicht gegenüber der Konsole, an welcher es angeordnet ist, bewegt wird und/oder dass das Greifelement während des zweiten Schrittes nicht gegenüber dem Batteriemodul bewegt wird.

**In** einer vorteilhaften Ausführung des Systems die Steuerung so ausgestaltet ist, dass der Roboter während des Abdrückvorgangs nicht verfahren wird.

Gemäß einer möglichen Ausgestaltung der vorliegenden Erfindung ist vorgesehen, dass die Steuerung des Systems so ausgestaltet ist, dass die Handlingeinheit das Batteriemodul nach dem durch die Abdrückeinheit erfolgten Ablösen des Batteriemoduls von einem Boden des Gehäuses der Batterieeinheit anhebt, während der Schwenkrahmen noch in einer verschwenkten Stellung befindet und/oder die Abdrückeinheit sich in einer betätigten Stellung befindet, wobei der Schwenkrahmen bevorzugt durch das Anheben in eine Transportposition zurückschwenkt.

Gemäß einer möglichen Ausgestaltung der vorliegenden Erfindung ist vorgesehen, dass die Steuerung so ausgestaltet ist, dass nach dem durch die Abdrückeinheit erfolgten Ablösen des Batteriemoduls von einem Boden des Gehäuses der Batterieeinheit die Abdrückeinheit wieder zurückverfahren wird, wodurch das Batteriemodul und/oder der Schwenkrahmen zumindest teilweise oder ganz in die jeweilige Ausgangsposition zurück schwenken, und erst danach ein Anheben des Batteriemoduls über den Roboter erfolgt. Dies ist insbesondere bei besonders beengten Platzverhältnissen von Vorteil.

Gemäß einer möglichen Ausgestaltung der vorliegenden Erfindung handelt es sich bei der Handlingeinheit um einen Roboter, insbesondere um einen Roboter mit einem Roboteram mit mehreren rotatorischen Achsen. Beispielsweise kann es sich um einen Industrieroboter mit mindestens 6 Achsen handeln.

Gemäß einer möglichen Ausgestaltung der vorliegenden Erfindung ist die Steuerung so ausgestaltet, dass sie die Handlingeinheit und den Greifer so ansteuert, dass diese die oben und im folgenden beschriebenen Funktionen und/oder Schritte durchführen. Insbesondere kann die Steuerung so ausgestaltet sein, dass die Handlingeinheit und der Greifer die Funktionen und/oder Schritte automatisiert durchführen.

Gemäß einer möglichen Ausgestaltung der vorliegenden Erfindung umfasst die oben oder im folgenden beschriebene Steuerung oder Steuerungen einen Mikroprozessor und einen nicht-flüchtigen Speicher, auf welchem ein Computerprogramm abgespeichert ist, welches beim Ablaufen auf dem Mikroprozessor die oben sowie im folgenden beschriebenen Funktionen und/oder Schritte durchführt. Die Steuerung und insbesondere der Microprozessor steht bevorzugt mit den Aktoren und/oder Sensoren des Greifers und/oder der Handlingeinheit in einer Steuer- und/oder Signalverbindung und steuert die Aktoren an und/oder wertet die Signale der Sensoren aus.

Die Erfindung umfasst weiterhin ein Verfahren zur automatisierten Demontage eines Batteriemoduls einer Batterieeinheit mit einem Greifer wie oben bereits beschrieben, wobei die Abdrückeinheit eine Abdrückbewegung durchführt, durch welche das Modul von einem Boden des Gehäuses der Batterieeinheit abgelöst wird.

Gemäß einer möglichen Ausgestaltung der vorliegenden Erfindung ist vorgesehen, dass das Greifelement des Greifers durch einen ersten Aktor unter eine Kontur des Batteriemoduls gefahren wird und das Abdrückelement mittels eines zweiten Aktors bewegt wird, um eine Abdrückbewegung durchzuführen, durch welche das Modul mittels des Greifelements angehoben wird, um die Verbindung zum Boden des Batteriesystems zu lösen.

Gemäß einer möglichen Ausgestaltung der vorliegenden Erfindung ist vorgesehen, dass das Greifelement während des Ablösens des Batteriemoduls über die Abdrückeinheit nicht gegenüber der Konsole, an welcher es angeordnet ist, und/oder dem Batteriemodul bewegt wird.

Gemäß einer möglichen Ausgestaltung der vorliegenden Erfindung ist vorgesehen, dass eine Schwenkkonsole, welche schwenkbar an der Tragkonsole angelenkt ist, bei der Betätigung der Abdrückeinheit mit dem gegriffenen Batteriemodul mitverschwenkt.

Das Verfahren erfolgt bevorzugt so, wie dies bereits oben im Hinblick auf den Greifer und das System beschrieben wurde.

Die Erfindung wird nachfolgend anhand eines Ausführungsbeispiels und der Zeichnungen näher erläutert.

Hierbei zeigen:
- Fig. 1: ein Ausführungsbeispiel eines erfindungsgemäßen Greifers mit einer linksseitigen Abdrückeinheit zum Auslösen und Herausheben eines Batteriemoduls aus einer Batteriewanne in seitlicher Ansicht, wobei das zu lösende Batteriemodul sowie den Rand der Batteriewanne als Abstützfläche der Abdrückeinheit dargestellt sind,
- Fig. 2: das in Fig. 1 gezeigte Ausführungsbeispiel eines Greifers in einer ersten Seitenansicht,
- Fig. 3: das in Fig. 1 gezeigte Ausführungsbeispiel eines Greifers in der Draufsicht
- Fig. 4: das in Fig. 1 gezeigte Ausführungsbeispiel eines Greifers in einer zweiten Seitansicht, und
- Fig. 5: ein zweites Ausführungsbeispiel eines Greifers mit einem linear verfahrbaren Abdrückelement.

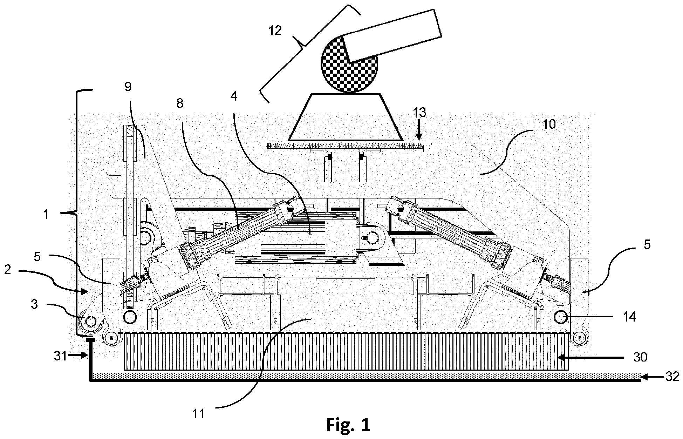

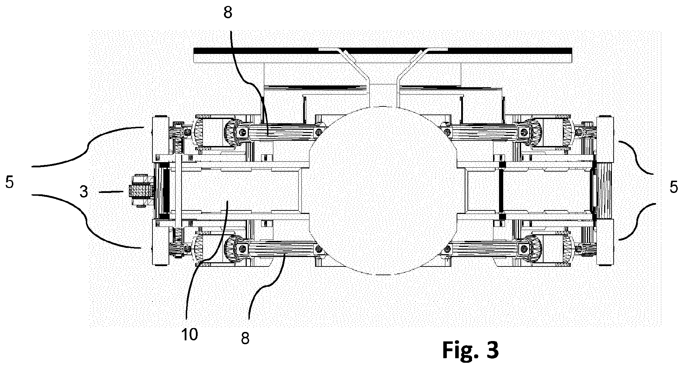

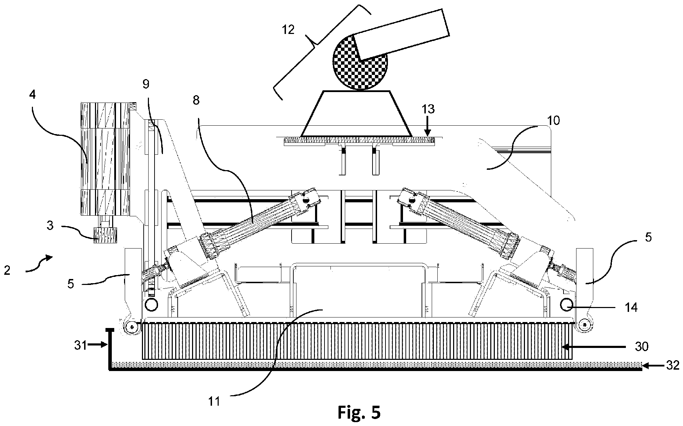

Fig. 1 bis 4 zeigen ein erstes Ausführungsbeispiel eines erfindungsgemäßen Greifers 1, und Fig. 5 ein zweites Ausführungsbeispiel, welches sich von dem ersten Ausführungsbeispiel nur im Hinblick auf die Ausgestaltung des Abdrückelements unterscheidet, so dass die beiden Ausführungsbeispiele zunächst gemeinsam beschrieben werden. Bei den in Figuren 1 - 5 gezeigten Ausführungsbeispielen sind mehrere Aspekte der vorliegenden Erfindung in Kombination verwirklicht. Die jeweils zu einem der erfindungsgemäßen Aspekte beschriebenen Merkmale können aber auch unabhängig von den jeweils anderen Aspekten zum Einsatz kommen.

Der Greifer 1 umfasst eine Schnittstelle 13, über welche er an der lediglich schematisch dargestellten Handling-Einheit 12 angebracht werden kann, insbesondere am Endglied eines Roboterarms eines Roboters. Mittels der Schnittstelle 13 wird eine Konsole 10, 11 des Greifers, welche die weiteren Komponenten des Greifers trägt, an der Handlingeinheit 12 befestigt.

Der Greifer umfasst eine Abdrückeinheit 2, mit welcher das Batteriemodul 30 aus dem Gehäuse 31 der Batterieeinheit herauslösbar ist. Hierbei ist die Abdrückeinheit so ausgestaltet, dass das Batteriemodul 30 durch einseitiges Anheben aus dem Gehäuse 31 der Batterieeinheit herauslösbar ist. Durch das einseitige Anheben kann das Batteriemodul insbesondere aus einer Haftverbindung mit dem Boden des Gehäuses 31 herausgelöst werden, wie sie beispielsweise durch einen Gap-Filler 32, d.h. eine wärmeleitende Paste, echte Klebeverbindungen oder eine dämpfende geklebte Matte/Elemente, über welche das Batteriemodul 30 mit dem Boden in Verbindung steht, entstehen kann.

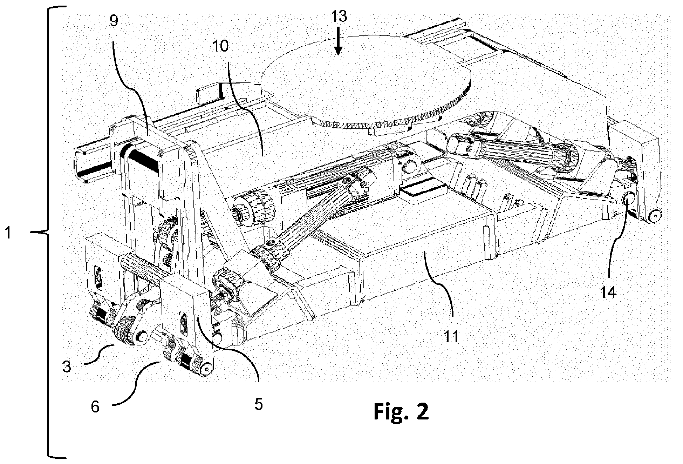

Die Abdrückeinheit umfasst im Ausführungsbeispiel ein Greifelement 5, welches mindestens eine - in Figur 2 ersichtliche - Greifkontur 6 aufweist, die durch Bewegen des Greifelementes unter eine Kontur des Batteriemoduls 30 geschoben werden kann, um das Batteriemodul am Greifer 1 formschlüssig zu halten.

Im Ausführungsbeispiel ist auf gegenüberliegenden Seiten des Greifers jeweils mindestens ein Greifelement 5 mit mindestens einer Greifkontur 6 vorgesehen, so dass die Kontur des Batteriemoduls 30 beidseitig untergriffen wird.

Die Greifelemente 5 sind an einer Konsole 11 des Greifers beweglich angeordnet und über erste Aktoren 8 gegenüber der Konsole 11 bewegbar. Im Ausführungsbeispiel sind die Greifelemente 5 verschwenkbar an der Konsole 11 angeordnet. Das Verschwenken erfolgt über die Hydraulik- und/oder Pneumatikzylinder 8.

Weiterhin umfasst die Abdrückeinheit ein Abdrückelement 3. Dieses ist ebenfalls an der Konsole 11 beweglich angeordnet und kann über den zweiten Aktor 4 gegenüber der Konsole 11 bewegt werden. Das Abdrückelement umfasst eine Abstützfläche, mit welcher sich das Abdrückelement auf einem Gegenelement abstützt, um eine Abdrückkraft auf die Konsole 11 auszuüben. Im Ausführungsbeispiel ist das Gegenelement der obere Rand des Gehäuses 31 der Batterieeinheit, auf welchen sich das Abdrückelement abstützt. Durch Betätigen des zweiten Aktors 4 wird das Abdrückelement 3 nach unten gegen den Rand des Gehäuses 31 verfahren und hebt hierdurch die Konsole 11 einseitig an. Hierdurch wird die Abdrückkraft von der Konsole 11 über die Greifer 5 auf das Batteriemodul 30 übertragen, welches hierdurch ebenfalls einseitig angehoben wird.

Im ersten Ausführungsbeispiel in Fig. 1 bis 4 ist die Abstützfläche des Abdrückelementes 3 als eine Rolle ausgeführt, so dass die Abstützfläche bei der Bewegung des Abdrückelementes nach unten auf dem Gegenelement abrollen kann.

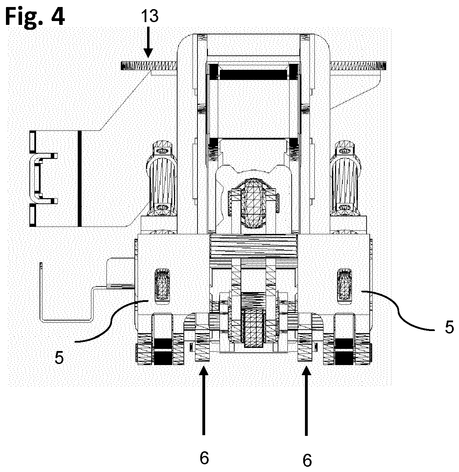

Weiterhin ist das Abdrückelement 3 im ersten Ausführungsbeispiel in Fig. 4 als Hebel ausgeführt, welcher an der Konsole 11 verschwenkbar gelagert ist und über den zweiten Aktor 4 betätigt wird. Die Schwenkachse des Abdrückelementes 3 verläuft parallel zu den Schwenkachsen der beiden Greifelemente 5.

Bei dem Aktor handelt es sich im Ausführungsbeispiel um einen Hydraulik-, Elektrik- und/oder Pneumatik-Zylinder.

Alternativ zu der im ersten Ausführungsbeispiel gewählten Hebelübersetzung kann das Abdrückelement 3 auch ohne Hebelübersetzung unmittelbar über den zweiten Aktor 4 angetrieben werden, wie dies in dem in Fig. 5 gezeigten zweiten Ausführungsbeispiel gezeigt ist.

Der zweite Aktor 4 ist hierfür mit vertikaler Ausrichtung oberhalb des Gegenelementes an der Konsole 11 angeordnet und bewegt das Abdrückelement 3 hierdurch linear nach unten gegen das Gegenelement. Im Ausführungsbeispiel ist hierfür der Zylinder des als Kolben-Zylindereinheit ausgeführten zweiten Aktors 4 an einer Seite der Konsole 11 angeordnet, während das Abdrückelement 3 am Kolben angeordnet ist. Auch hier handelt es sich bei dem Aktor um einen Hydraulik-, Elektrik- und/oder Pneumatik-Zylinder.

Das Abdrückelement 3 ist an der Konsole 11 auf der gleichen Seite wie eines der Greifelemente 5 angeordnet und liegt dem anderen, in der Zeichnung rechten Greifelement gegenüber. Die durch das Abdrückelement erzeugte Abdrückkraft wird daher über die Konsole 11 primär auf das auf der gleichen Seite wie das Abdrückelement 3 an der Konsole 11 angeordnete Greifelement 5 auf die im Bild linke Kontur des Batteriemoduls 30 übertragen. Durch die Verwendung eines von den Greifelementen separaten Abdrückelementes führt eine Betätigung des Abdrückelementes über den zweiten Aktor 4 nicht zu einer Relativbewegung der Greifelemente 5 gegenüber der Konsole 11 oder dem Batteriemodul. Die Abdrückkraft wird hierdurch sicher in das Batteriemodul eingeleitet.

Wie in Figur 2 ersichtlich sind die beiden Greifelemente 5 jeweils über zwei koaxiale Anlenkstellen an der Konsole 11 angelenkt. Die Greifkonturen 6 sind im Bereich der durch die beiden Anlenkstellen gebildeten Schwenkachsen angeordnet und im Ausführungsbeispiel zwischen den beiden Anlenkstellen vorgesehen. Die Anlenkstellen werden daher rechts und links des Batteriemodules neben die Kontur des Batteriemoduls, welche untergriffen werden soll, platziert. Durch Herunterschwenken des Greifelementes 5 wird die Greifkontur 6 sodann unter die Kontur des Batteriemoduls verfahren. Hierdurch ist auf jener Seite, auf welcher die Greifkonturen unter die Kontur des Batteriemoduls greifen, nur ein sehr geringer Bauraum nötig, um den Greifer zu platzieren. Hierdurch ist dieser auch einsetzbar, wenn die Batteriemodule sehr nah zu der Wand des Gehäuses 31 platziert sind.

Im Ausführungsbeispiel umfasst jedes der beiden Greifelemente 5 zwei Teile mit jeweils einer außen liegenden Anlenkstelle und einer innen liegenden Greifkontur. Die beiden Teile der Greifelemente sind über eine Verbindungsstange verbunden.

Zum Betätigen der Greifelemente 5 sind im Ausführungsbeispiel jeweils zwei Zylinder vorgesehen, welche jeweils an einem der beiden Teile der Greifelemente bzw. im Bereich einer der Anlenkstellen an den Greifelementen angreifen.

Das Abdrückelement 3 ist im Ausführungsbeispiel mittig zwischen den beiden Anlenkstellen des einen Greifelementes 5 angeordnet.

Der Hebelarm des Abdrückelementes 3 reicht im ersten Ausführungsbeispiel zwischen den beiden Teilen des linken Greifelementes 5 unterhalb der Verbindungsstange hindurch.

In einer alternativen Ausgestaltung kann auch auf die Verbindungsstange verzichtet werden und die beiden Teile der Greifelemente 5 jeweils separate Greifelemente bilden. Diese Lösung wurde beim zweiten Ausführungsbeispiel gewählt, um ausreichend Bauraum für den vertikal arbeitenden zweiten Aktor 4 zu haben.

In einer weiteren alternativen Ausgestaltung könnten die Greifelemente auch linear verfahrbar an der Konsole 11 angeordnet sein.

Gemäß einem weiteren Aspekt der Erfindung handelt es sich bei der Konsole 11, an welcher die Abdrückeinheit mit den Greifelementen 5 und dem Abdrückelement 3 angeordnet ist, um eine Schwenkkonsole, welche um eine Achse 14 schwenkbar an einer Tragkonsole 10 angeordnet ist. An der Tragkonsole 10 ist die Schnittstelle 13 vorgesehen, mittels welcher der Greifer an einer Handling-Einheit befestigt wird. Die Schwenkkonsole 11 ist daher gegenüber der Schnittstelle 13 um die Achse 14 verschwenkbar. Die Schwenkachse 14 ist auf der dem Abdrückelement 3 gegenüberliegenden Seite der Schwenkkonsole 11 angeordnet.

Im Ausführungsbeispiel verläuft die Schwenkachse 14 parallel zu den Schwenkachsen der Greifelemente 5 und des Abdrückelementes 3 des ersten Ausführungsbeispiels.

Bei einer Abdrückbewegung durch das Abdrückelement 3 schwenkt die Schwenkkonsole 11 zusammen mit dem gegriffenen Batteriemodul nach oben um die Achse 14, so dass die Schwenkbewegung nicht auf die Tragkonsole 10 oder die Schnittstelle 13 übertragen wird. Hierdurch werden die erheblichen Abdrückkräfte, welche zum einseitigen Herauslösen des Batteriemoduls benötigt werden, nicht auf die Handling-Einheit übertragen.

Die Schwenkkonsole 11 umfasst einen Begrenzungsrahmen 9, durch welchen die Schwenkbewegung begrenzt wird. Im Ausführungsbeispiel geht hierfür das der Schwenkachse 14 gegenüberliegende Ende der Tragkonsole 10 durch den Begrenzungsrahmen 9 hindurch. Das durch den Begrenzungsrahmen 9 hindurchgehende Ende der Tragkonsole 10 kommt daher in der Schwenkrichtung weg vom Schwenkrahmen in einer Endstellung in Anlage an den oberen Teil des Begrenzungsrahmen.

Das der Schwenkachse 14 gegenüberliegende freie Ende der Schwenkkonsole 11 wird daher in der Endstellung über den Begrenzungsrahmen 9 am Tragrahmen 10 gehalten, wenn der Tragrahmen angehoben wird. Das Gewicht des Batteriemoduls wird daher von dem Schwenkrahmen 11, an welchem das Batteriemodul über die Greifelemente gehalten ist, über die Schwenkachse 14 und den Begrenzungsrahmen 9 auf den Tragrahmen 10 übertragen.

Im zweiten Ausführungsbeispiel wird der Begrenzungsrahmen 9 weiterhin zur Montage des zweiten Aktors 4 an der Schwenkkonsole 11 genutzt.

Das Verfahren zum Herauslösen eines Batteriemoduls 30 aus dem Gehäuse 31 der Batterieeinheit mittels des erfindungsgemäßen Greifers 1 wird nun im Folgenden dargestellt. Hierfür werden der Modulgreifers 1 als auch der Roboterarm 12 des Handlingsystems über eine Steuerung entsprechend angesteuert, wobei das Verfahren bevorzugt automatisiert und ohne händischen Eingriff erfolgt.

Der Modulgreifer 1 fährt von oben auf das aus der Batteriewanne 31 zu entfernende Batteriemodul 30 und setzt auf dieses auf.

Nach dem Aufsetzen des Modulgreifers 1 auf dem Batteriemodul 30 sind wie in Fig. 1 gezeigt die beiden seitlichen Greifelemente 5 des Modulgreifers 1 auf gegenüberliegenden Seiten des Batteriemoduls 30 positioniert. Durch ein Verschwenken der Greifelemente nach außen fahren die an diesen als Greifkontur angeordneten Greiffinger 6 formschlüssig unter eine Formkontur des Batteriemoduls 30. Die Greifelemente 5 werden über die ersten Aktoren 8 betätigt. Das Batteriemodul wird nun über die Greifelemente 5 an der Schwenkkonsole 11 des Greifers gehalten.

Als zweiter Aktor zum Betätigen der Abdrückeinheit 2 betätigt der Abdrückzylinder 4 nun das linksseitig angeordnete Abdrückelement 3. Hierbei kann das Abdrücken wie in Fig. 5 direkt über den Abdrückzylinder 4 oder wie im ersten Ausführungsbeispiel in Fig. 1 bis 4 unter Einsatz einer Hebelübersetzung erfolgen, um die Kraft zum Ablösen des verklebten Batteriemoduls 30 aus der Batteriewanne 31 zu erhöhen.

Das Abdrückelement 3 fährt auf eine Abstützfläche wie beispielsweise den Rand der Batteriewanne. Dadurch, dass die Greiferfinger 6 formschlüssig an dem Batteriemodul 30 positioniert sind, führt die über die Abdrückeinheit 2 ausgeführte Hebelbewegung zum Anheben des Batteriemoduls 30 und damit ein Ablösen vom Gapfiller 32, der sich zwischen der Unterseite des Batteriemoduls 30 und der Batteriewanne befindet, und zum Herausheben des Batteriemoduls 30 beginnend an der Seite der ausgeführten Hebelbewegung der Abdrückeinheit 2.

Der durch die Hebelbewegung der Abdrückeinheit 2 erzeugten Bewegung des Batteriemoduls 30 folgend verschwenkt auch die Schwenkkonsole 11, an welcher das Abdrückelement 3 und die Greifelemente 5 angeordnet sind, um ihre Drehachse 14 nach oben. Hierbei werden nur die Reaktionskräfte durch das Abhebeln um den Drehpunkt auf den Roboterarm 12 des Handlingsystems ausgeübt. Es wirken somit keine starken Zug- oder Hebelkräfte, welche aus einer Ausreißbewegung resultieren würden, auf den Roboterarm des Handlingsystems, sodass dieser in der Konstruktion leichter ausgelegt werden kann.

Wenn das Abdrückelement 3 komplett ausgefahren und als Folge das Modul aus dem Gapfiller 32 gelöst ist, wird das Batteriemodul 30 mit dem Greifer 1 vom Roboter 12 nach oben aus der Batteriewanne 31 gehoben. Dabei rollt das Abdrückelement 3 im ersten Ausführungsbeispiel auf dem Rand der Batteriewanne 31 als vorherige Abstützfläche ab und die Schwenkkonsole 11 fährt zurück in ihre horizontale Ausgangslage vor der Abdrückbewegung.

In einer alternativen Ausführung wird die Abdrückeinheit 2 nach dem Auslösen des Batteriemoduls 30 eingefahren und das Batteriemodul 30 und/oder der Schwenkrahmen 11 zunächst wieder in die Ausgangsposition zurückgeschwenkt und das Batteriemodul 30 auf der Schicht des Gapfillers 32 abgelegt. Erst dann bewegt der Roboter 12 der Handlingseinheit den Greifer 1 mit dem Batteriemodul 30 nach oben. Hierbei muss die Vorraussetzung gegeben sein, dass der Gapfiller 32 nicht sofort wieder mit dem Batteriemodul verklebt, womit das Ablösen über die Abdrückeinheit 2 hinfällig wäre. Der Vorteil dieser Ausführung zeigt sich, wenn der Raum in der Batteriewanne 31 sehr beengt ist und es somit entscheidend ist, das Batteriemodul 30 bei der Hebebewegung sofort in der horizontalen Lage zu haben.

Als nächstes bewegt der Roboter 12 der Handlingseinheit den Greifer 1 mit dem Batteriemodul 30 auf den gewünschten Ablageplatz. Wenn zuvor noch nicht geschehen, kann nun parallel der Abdrückzylinder 4 eingefahren und somit das Abdrückelement 3 zurückgestellt werden.

Nach dem Ablegen des Batteriemoduls 30 auf dem vorgesehenen Ablageplatz wird der formschlüssige Griff der Greiferfinger 6 gelöst und der Greifer 1 entfernt sich vom Batteriemodul 30.

Nun kann der Vorgang mit einem weiteren Batteriemodul wiederholt werden.

## Patentansprüche

1. Greifer (1) zur automatisierten Demontage eines Batteriemoduls (30) einer Batterieeinheit, umfassend:
- eine Schnittstelle (13) zur Montage des Greifers (1) an einer Handlingeinheit (12), insbesondere einem Roboter,
- eine Konsole (11) und
- eine Abdrückeinheit (2), mit welcher das Batteriemodul aus einem Gehäuse (31) der Batterieeinheit herauslösbar ist,
wobei der Greifer (1) ein an der Konsole (11) beweglich angeordnetes Greifelement (5) aufweist, welches durch einen ersten Aktor (8) unter eine Kontur des Batteriemoduls (30) fahrbar ist und somit das Modul sicher greift, **gekennzeichnet durch**
ein Abdrückelement (3) mit einer Abstützfläche zum Abstützen an einem Gegenelement, wobei das Abdrückelement (3) beweglich an der Konsole (11) angeordnet ist und mittels eines zweiten Aktors (4) bewegbar ist, um eine Abdrückkraft auf die Konsole (11) auszuüben, durch welche das Modul mittels des an der Konsole (11) angeordneten Greifelements (5) angehoben wird, wobei das Abdrückelement (3) und das Greifelement (5) so ausgestaltet sind, dass das Batteriemodul durch einseitiges Anheben aus dem Gehäuse der Batterieeinheit herauslösbar ist.

2. Greifer (1) zur automatisierten Demontage eines Batteriemoduls (30) einer Batterieeinheit, insbesondere Greifer nach Anspruch 1, umfassend:
- eine Schnittstelle (13) zur Montage des Greifers (1) an einer Handlingeinheit (12), inbesondere einem Roboter,
- eine Tragkonsole (10) und
- eine Abdrückeinheit (2), **dadurch gekennzeichnet, dass** mit der Abdrückeinheit (2) das Batteriemodul (30) durch einseitiges Anheben aus einem Gehäuse (31) der Batterieeinheit herauslösbar ist,
wobei die Abdrückeinheit (2) an einer Schwenkkonsole (11) angeordnet ist, welche schwenkbar an der Tragkonsole (10) angelenkt ist und bei der Betätigung der Abdrückeinheit (2) mit dem gegriffenen Batteriemodul (30) mitverschwenkt, wobei an der Schwenkkonsole (11) mindestens ein Greifelement (5) angeordnet ist.

3. Greifer (1) nach Anspruch 2, wobei die Abdrückeinheit (2) auf einer der Schwenkachse (14) gegenüberliegenden Seite der Schwenkkonsole (11) angeordnet ist und/oder eine Abdrückbewegung erzeugt, welche in einer Ebene senkrecht zur Schwenkachse (14) verläuft.

4. Greifer (1) nach Anspruch 2 der 3, wobei das mindestens eine Greifelement (5) mittels eines Aktors (8) unter eine Kontur des Batteriemoduls (30) fahrbar ist und/oder auf einer der der Schwenkachse (14) gegenüberliegenden Seite der Schwenkkonsole (11) angeordnet ist,
und/oder wobei an der Schwenkkonsole (11) ein Abdrückelement (3) mit einem Abstützelement zum Abstützen an einem Gegenelement angeordnet ist, wobei das Abdrückelement (3) mittels eines Aktors (4) bewegbar ist, um eine Abdrückbewegung durchzuführen,
wobei bevorzugt durch die Abdrückbewegung des Abdrückelements (3) das Modul mittels des Greifelements (5) einseitig angehoben und aus der Verbindung zum Boden der Batterie gelöst wird.

5. Greifer (1) nach einem der vorangegangenen Ansprüche, wobei das mindestens ein Greifelement (5) um eine Drehachse drehbar oder linear verfahrbar ist, um unter die Kontur des Batteriemoduls (30) zu greifen, wobei die Drehachse bevorzugt horizontal ausgerichtet ist.

6. Greifer (1) nach einem der vorangegangenen Ansprüche, wobei mindestens zwei Greifelemente (5) vorgesehen sind, welche auf gegenüberliegenden Seiten unter eine Kontur des Batteriemoduls (30) fahrbar sind, wobei bevorzugt die beiden Greifelemente (5) beweglich an dem Greifer (1), insbesondere der Schwenkkonsole (11), angeordnet sind und durch mindestens einen Aktor (8) bewegbar sind.

7. Greifer (1) nach einem der vorangegangenen Ansprüche, wobei ein Abdrückelement (3) der Abdrückeinheit (2) schwenkbar an dem Greifer (1) angelenkt ist und zur Erzeugung der Abdrückbewegung über einen Aktor (4) verschwenkbar ist, oder wobei das Abdrückelement (3) linear verfahrbar an dem Greifer (1) angeordnet ist und/oder zur Erzeugung der Abdrückbewegung über einen Aktor (4) linear verfahren wird, wobei das Abdrückelement (3) bevorzugt ein Abstützelement zum Abstützen auf einem Gegenelement aufweiset, wobei es sich bevorzugt um eine Rolle handelt, und/oder wobei die Abdrückeinheit (2) als Aktor (4) einen Hydraulik-, Elektrik- oder Pneumatikzylinder aufweist.

8. Greifer (1) nach einem der vorangegangenen Ansprüche, wobei die Abdrückbewegung auf eine Konsole (11) des Greifers (1) und ein an dieser Konsole (11) beweglich angeordnetes Greifelement (5) des Greifers (1) übertragen wird, insbesondere über eine Schwenkachse (14), an welcher das Abdrückelement (3) schwenkbar am Greifer (1) angelenkt ist, und/oder über den Aktor (4), wobei es sich bei der Konsole (11) bevorzugt um eine Schwenkkonsole handelt, welche über eine Schenkachse (14) an der Tragkonsole (10) angeordnet ist, wobei bevorzugt die Schwenkachsen von Abdrückelement (3) und Schwenkkonsole (11) parallel verlaufen und/oder auf gegenüberliegenden Seiten an der Schwenkkonsole (11) angeordnet sind.

9. System zur automatisierten Demontage eines Batteriemoduls (30) einer Batterieeinheit mit einem Greifer (1) nach einem der vorangegangenen Ansprüche, einer Handlingeinheit (12) und einer Steuerung.

10. System nach Anspruch 9, wobei die Steuerung so ausgestaltet ist, dass in einem ersten Schritt eine Verbindung, insbesondere eine formschlüssige Verbindung mindestens eines Greifelementes (5) des Greifers (1) mit dem Batteriemodul (30) hergestellt wird und in einem zweiten Schritt das Batteriemodul (30) durch Betätigen der Abdrückeinheit (2) einseitig angehoben wird, um die Verbindung zum Boden des Batteriesystems zu lösen, wobei der erste und der zweite Schritt bevorzugt durch unterschiedliche Aktoren durchgeführt werden und/oder das Greifelement (5) während des zweiten Schrittes nicht gegenüber der Konsole (11), an welcher es angeordnet ist, und/oder dem Batteriemodul (30) bewegt wird.

11. System nach einem der Ansprüche 9 bis 10, wobei die Steuerung so ausgestaltet ist, dass die Handlingeinheit (12) während des Abdrückvorgangs nicht verfahren wird.

12. System nach einem der Ansprüche 9 bis 11, wobei die Steuerung so ausgestaltet ist, dass die Handlingeinheit (12) das Batteriemodul (30) nach dem durch die Abdrückeinheit (2) erfolgeten Ablösen des Batteriemoduls (30) von einem Boden des Gehäuses (31) der Batterieeinheit anhebt, während der Schwenkrahmen noch in einer verschwenkten Stellung befindet und/oder die Abdrückeinheit (2) sich in einer betätigten Stellung befindet, wobei der Schwenkrahmen bevorzugt durch das Anheben zurück in eine Transportposition zurückschwenkt.

13. System nach einem der Ansprüche 9 bis 11, wobei die Steuerung so ausgestaltet ist, dass nach dem durch die Abdrückeinheit (2) erfolgten Ablösen des Batteriemoduls (30) von einem Boden des Gehäuses (31) der Batterieeinheit die Abdrückeinheit (2) wieder zurückverfahren wird, wodurch das Batteriemodul (30) und/oder der Schwenkrahmen zumindest teilweise oder ganz zurück in die jeweilige Ausgangsposition zurück schwenken, und erst danach ein Anheben des Batteriemoduls (30) über die Handlingeinheit (12) erfolgt.

14. Verfahren zur automatisierten Demontage eines Batteriemoduls (30) einer Batterieeinheit mit einem Greifer (1) nach einem der Ansprüche 1 bis 8 und/oder einem System nach einem der Ansprüche 9 bis 13, **dadurch gekennzeichnet, dass** die Abdrückeinheit (2) eine Abdrückbewegung durchführt, durch welche das Modul von einem Boden des Gehäuses (31) der Batterieeinheit abgelöst wird.

15. Verfahren nach Anspruch 14, wobei
ein Greifelement (5) des Greifers (1) durch einen ersten Aktor (8) unter eine Kontur des Batteriemoduls (30) gefahren wird und das Abdrückelement (3) mittels eines zweiten Aktors (4) bewegt wird, um eine Abdrückbewegung durchzuführen, durch welche das Modul mittels des Greifelements (5) angehoben wird, um die Verbindung zum Boden des Batteriesystems zu lösen, und/oder
das Greifelement (5) während des Ablösens des Batteriemoduls (30) über die Abdrückeinheit (2) nicht gegenüber der Konsole (11), an welcher es angeordnet ist, und/oder dem Batteriemodul (30) bewegt wird,
und/oder
eine Schwenkkonsole (11), welche schwenkbar an der Tragkonsole (10) angelenkt ist, bei der Betätigung der Abdrückeinheit (2) mit dem gegriffenen Batteriemodul (30) mitverschwenkt.

## Claims

1. Gripper (1) for the automated disassembly of a battery module (30) of a battery unit, comprising:
- an interface (13) for mounting the gripper (1) on a handling device (12), in particular a robot,
- a bracket (11) and
- a push-off unit (2), with which the battery module can be released from a housing (31) of the battery unit,
wherein the gripper (1) comprises a gripper element (5) movably arranged on the bracket (11), which gripper element can be moved under a contour of the battery module (30) by a first actuator (8) and thus securely grips the module, **characterized by**
a push-off element (3) with a support surface for supporting against a counter-element, wherein the push-off element (3) is movably arranged on the bracket (11) and is movable by means of a second actuator (4) in order to exert a push-off force on the bracket (11), by which the module is lifted by means of the gripper element (5) arranged on the bracket (11),
wherein the push-off element (3) and the gripper element (5) are configured such that the battery module can be released from the housing of the battery unit by one-sided lifting.

2. Gripper (1) for the automated disassembly of a battery module (30) of a battery unit, in particular gripper according to claim 1, comprising:
- an interface (13) for mounting the gripper (1) on a handling device (12), in particular a robot,
- a support bracket (10) and
- a push-off unit (2), with which the battery module (30) can be released from a housing (31) of the battery unit by one-sided lifting,
wherein the push-off unit (2) is arranged on a pivot bracket (11), which is pivotably articulated on the support bracket (10) and, upon actuation of the push-off unit (2), pivots along with the gripped battery module (30), wherein at least one gripper element (5) is arranged on the pivot bracket (11).

3. Gripper (1) according to claim 2, wherein the push-off unit (2) is arranged on a side of the pivot bracket (11) opposite the pivot axis (14) and/or generates a push-off movement which extends in a plane perpendicular to the pivot axis (14).

4. Gripper (1) according to claim 2 or 3, wherein the at least one gripper element (5) can be moved under a contour of the battery module (30) by means of an actuator (8) and/or is arranged on a side of the pivot bracket (11) opposite the pivot axis (14),
and/or wherein a push-off element (3) with a support element for supporting against a counter-element is arranged on the pivot bracket (11), wherein the push-off element (3) is movable by means of an actuator (4) in order to perform a push-off movement,
wherein preferably, by the push-off movement of the push-off element (3), the module is lifted on one side by means of the gripper element (5) and released from the connection to the floor of the battery.

5. Gripper (1) according to any one of the preceding claims, wherein the at least one gripper element (5) is rotatable about an axis of rotation or linearly movable in order to grip under the contour of the battery module (30), wherein the axis of rotation is preferably oriented horizontally.

6. Gripper (1) according to any one of the preceding claims, wherein at least two gripper elements (5) are provided, which can be moved under a contour of the battery module (30) on opposite sides, wherein preferably the two gripper elements (5) are movably arranged on the gripper (1), in particular the pivot bracket (11), and are movable by means of at least one actuator (8).

7. Gripper (1) according to any one of the preceding claims, wherein a push-off element (3) of the push-off unit (2) is pivotably articulated on the gripper (1) and is pivotable via an actuator (4) to generate the push-off movement, or wherein the push-off element (3) is arranged linearly movably on the gripper (1) and/or is moved linearly via an actuator (4) to generate the push-off movement, wherein the push-off element (3) preferably comprises a support element for supporting on a counter-element, which is preferably a roller, and/or wherein the push-off unit (2) comprises, as actuator (4), a hydraulic, electric or pneumatic cylinder.

8. Gripper (1) according to any one of the preceding claims, wherein the push-off movement is transmitted to a bracket (11) of the gripper (1) and to a gripper element (5) of the gripper (1) movably arranged on this bracket (11), in particular via a pivot axis (14) on which the push-off element (3) is pivotably articulated on the gripper (1), and/or via the actuator (4), wherein the bracket (11) is preferably a pivot bracket which is arranged on the support bracket (10) via a pivot axis (14), wherein preferably the pivot axes of the push-off element (3) and of the pivot bracket (11) run parallel and/or are arranged on opposite sides of the pivot bracket (11).

9. System for the automated disassembly of a battery module (30) of a battery unit, having a gripper (1) according to any one of the preceding claims, a handling device (12) and a controller.

10. System according to claim 9, wherein the controller is configured such that, in a first step, a connection, in particular a form-fit connection, of at least one gripper element (5) of the gripper (1) with the battery module (30) is established, and in a second step the battery module (30) is lifted on one side by actuating the push-off unit (2) in order to release the connection to the floor of the battery system, wherein the first and the second step are preferably performed by different actuators and/or the gripper element (5) is not moved relative to the bracket (11) on which it is arranged and/or relative to the battery module (30) during the second step.

11. System according to any one of claims 9 to 10, wherein the controller is configured such that the handling device (12) is not moved during the push-off process.

12. System according to any one of claims 9 to 11, wherein the controller is configured such that the handling device (12) lifts the battery module (30) after the detachment of the battery module (30) from a floor of the housing (31) of the battery unit effected by the push-off unit (2), while the pivot frame is still in a pivoted position and/or the push-off unit (2) is in an actuated position, wherein the pivot frame preferably pivots back into a transport position by the lifting.

13. System according to any one of claims 9 to 11, wherein the controller is configured such that, after the detachment of the battery module (30) from a floor of the housing (31) of the battery unit effected by the push-off unit (2), the push-off unit (2) is moved back again, whereby the battery module (30) and/or the pivot frame pivot back at least partially or completely into the respective initial position, and only thereafter a lifting of the battery module (30) via the handling device (12) takes place.

14. Method for the automated disassembly of a battery module (30) of a battery unit with a gripper (1) according to any one of claims 1 to 8 and/or a system according to any one of claims 9 to 14, wherein the push-off unit (2) performs a push-off movement, by which the module is detached from a floor of the housing (31) of the battery unit.

15. Method according to claim 14, wherein
a gripper element (5) of the gripper (1) is moved under a contour of the battery module (30) by a first actuator (8) and the push-off element (3) is moved by means of a second actuator (4) in order to perform a push-off movement, by which the module is lifted by means of the gripper element (5) in order to release the connection to the floor of the battery system,
and/or
the gripper element (5) is not moved relative to the bracket (11) on which it is arranged and/or relative to the battery module (30) during the detachment of the battery module (30) via the push-off unit (2),
and/or
a pivot bracket (11), which is pivotably articulated on the support bracket (10), pivots along with the gripped battery module (30) upon actuation of the push-off unit (2).

## Revendications

1. Préhenseur (1) pour le démontage automatisé d'un module de batterie (30) d'une unité de batterie, comprenant :
- une interface (13) pour le montage du préhenseur (1) sur une unité de manipulation (12), en particulier un robot,
- une console (11) et
- une unité de poussée (2) au moyen de laquelle le module de batterie peut être extrait d'un boîtier (31) de l'unité de batterie,
le préhenseur (1) présentant un élément de préhension (5) disposé de manière mobile sur la console (11), lequel peut être déplacé sous un contour du module de batterie (30) par un premier actionneur (8) et saisit ainsi de manière sûre le module,
**caractérisé par**
un élément de poussée (3) présentant une surface d'appui destinée à prendre appui sur un contre-élément, l'élément de poussée (3) étant disposé de manière mobile sur la console (11) et pouvant être déplacé au moyen d'un deuxième actionneur (4) afin d'exercer une force de poussée sur la console (11), par laquelle le module est soulevé au moyen de l'élément de préhension (5) disposé sur la console (11),
l'élément de poussée (3) et l'élément de préhension (5) étant conçus de telle sorte que le module de batterie peut être extrait du boîtier de l'unité de batterie par soulèvement unilatéral.

2. Préhenseur (1) pour le démontage automatisé d'un module de batterie (30) d'une unité de batterie, en particulier préhenseur selon la revendication 1, comprenant :
- une interface (13) pour le montage du préhenseur (1) sur une unité de manipulation (12), en particulier un robot,
- une console de support (10) et
- une unité de poussée (2) au moyen de laquelle le module de batterie (30) peut être extrait d'un boîtier (31) de l'unité de batterie par soulèvement unilatéral, l'unité de poussée (2) étant disposée sur une console pivotante (11) qui est articulée de manière pivotante sur la console de support (10) et pivote conjointement avec le module de batterie (30) saisi lors de l'actionnement de l'unité de poussée (2), au moins un élément de préhension (5) étant disposé sur la console pivotante (11).

3. Préhenseur (1) selon la revendication 2, l'unité de poussée (2) étant disposée sur un côté de la console pivotante (11) opposé à l'axe de pivotement (14) et/ou générant un mouvement de poussée qui s'étend dans un plan perpendiculaire à l'axe de pivotement (14).

4. Préhenseur (1) selon la revendication 2 ou 3, dans lequel l'au moins un élément de préhension (5) peut être déplacé sous un contour du module de batterie (30) au moyen d'un actionneur (8) et/ou est disposé sur un côté de la console pivotante (11) opposé à l'axe de pivotement (14),
et/ou dans lequel un élément de poussée (3) présentant un élément d'appui destiné à prendre appui sur un contre-élément est disposé sur la console pivotante (11), l'élément de poussée (3) pouvant être déplacé au moyen d'un actionneur (4) afin d'effectuer un mouvement de poussée,
de préférence le module étant soulevé unilatéralement au moyen de l'élément de préhension (5) et détaché de la liaison avec le fond de la batterie par le mouvement de poussée de l'élément de poussée (3).

5. Préhenseur (1) selon l'une des revendications précédentes, dans lequel l'au moins un élément de préhension (5) peut tourner autour d'un axe de rotation ou être déplacé linéairement afin de venir en prise sous le contour du module de batterie (30), l'axe de rotation étant de préférence orienté horizontalement.

6. Préhenseur (1) selon l'une des revendications précédentes, dans lequel au moins deux éléments de préhension (5) sont prévus, lesquels peuvent être déplacés sous un contour du module de batterie (30) sur des côtés opposés, les deux éléments de préhension (5) étant de préférence disposés de manière mobile sur le préhenseur (1), en particulier sur la console pivotante (11), et pouvant être déplacés par au moins un actionneur (8).

7. Préhenseur (1) selon l'une des revendications précédentes, dans lequel un élément de poussée (3) de l'unité de poussée (2) est articulé de manière pivotante sur le préhenseur (1) et peut être pivoté au moyen d'un actionneur (4) pour générer le mouvement de poussée, ou dans lequel l'élément de poussée (3) est disposé de manière déplaçable linéairement sur le préhenseur (1) et/ou est déplacé linéairement au moyen d'un actionneur (4) pour générer le mouvement de poussée, l'élément de poussée (3) présentant de préférence un élément d'appui destiné à prendre appui sur un contre-élément, s'agissant de préférence d'un galet, et/ou l'unité de poussée (2) présentant comme actionneur (4) un vérin hydraulique, électrique ou pneumatique.

8. Préhenseur (1) selon l'une des revendications précédentes, dans lequel le mouvement de poussée est transmis à une console (11) du préhenseur (1) et à un élément de préhension (5) du préhenseur (1) disposé de manière mobile sur cette console (11), en particulier par l'intermédiaire d'un axe de pivotement (14) sur lequel l'élément de poussée (3) est articulé de manière pivotante sur le préhenseur (1), et/ou par l'intermédiaire de l'actionneur (4), la console (11) étant de préférence une console pivotante qui est disposée sur la console de support (10) par l'intermédiaire d'un axe de pivotement (14), les axes de pivotement de l'élément de poussée (3) et de la console pivotante (11) s'étendant de préférence parallèlement et/ou étant disposés sur des côtés opposés de la console pivotante (11).

9. Système pour le démontage automatisé d'un module de batterie (30) d'une unité de batterie, comprenant un préhenseur (1) selon l'une des revendications précédentes, une unité de manipulation (12) et une commande.

10. Système selon la revendication 9, dans lequel la commande est conçue de telle sorte que, dans une première étape, une liaison, en particulier une liaison par complémentarité de forme, d'au moins un élément de préhension (5) du préhenseur (1) avec le module de batterie (30) est établie et, dans une deuxième étape, le module de batterie (30) est soulevé unilatéralement par actionnement de l'unité de poussée (2) afin de détacher la liaison avec le fond du système de batterie, la première et la deuxième étape étant de préférence effectuées par des actionneurs différents et/ou l'élément de préhension (5) n'étant pas déplacé par rapport à la console (11) sur laquelle il est disposé et/ou par rapport au module de batterie (30) pendant la deuxième étape.

11. Système selon l'une des revendications 9 à 10, dans lequel la commande est conçue de telle sorte que l'unité de manipulation (12) n'est pas déplacée pendant l'opération de poussée.

12. Système selon l'une des revendications 9 à 11, dans lequel la commande est conçue de telle sorte que l'unité de manipulation (12) soulève le module de batterie (30) après le détachement du module de batterie (30) d'un fond du boîtier (31) de l'unité de batterie effectué par l'unité de poussée (2), tandis que le cadre pivotant se trouve encore dans une position pivotée et/ou l'unité de poussée (2) se trouve dans une position actionnée, le cadre pivotant repivotant de préférence en position de transport par le soulèvement.

13. Système selon l'une des revendications 9 à 11, dans lequel la commande est conçue de telle sorte que, après le détachement du module de batterie (30) d'un fond du boîtier (31) de l'unité de batterie effectué par l'unité de poussée (2), l'unité de poussée (2) est ramenée en arrière, ce par quoi le module de batterie (30) et/ou le cadre pivotant repivotent au moins partiellement ou entièrement dans la position initiale respective, et un soulèvement du module de batterie (30) par l'unité de manipulation (12) n'a lieu qu'ensuite.

14. Procédé pour le démontage automatisé d'un module de batterie (30) d'une unité de batterie avec un préhenseur (1) selon l'une des revendications 1 à 8 et/ou un système selon l'une des revendications 9 à 14, dans lequel l'unité de poussée (2) effectue un mouvement de poussée par lequel le module est détaché d'un fond du boîtier (31) de l'unité de batterie.

15. Procédé selon la revendication 14, dans lequel
un élément de préhension (5) du préhenseur (1) est déplacé sous un contour du module de batterie (30) par un premier actionneur (8) et l'élément de poussée (3) est déplacé au moyen d'un deuxième actionneur (4) afin d'effectuer un mouvement de poussée par lequel le module est soulevé au moyen de l'élément de préhension (5) afin de détacher la liaison avec le fond du système de batterie,
et/ou
l'élément de préhension (5) n'est pas déplacé par rapport à la console (11) sur laquelle il est disposé et/ou par rapport au module de batterie (30) pendant le détachement du module de batterie (30) par l'unité de poussée (2),
et/ou
une console pivotante (11), qui est articulée de manière pivotante sur la console de support (10), pivote conjointement avec le module de batterie (30) saisi lors de l'actionnement de l'unité de poussée (2).
